# EUROPÄISCHE PATENTSCHRIFT

(11) **EP 2 955 786 B1**
(45) Veröffentlichungstag und Bekanntmachung des Hinweises auf die Patenterteilung: **03.05.2017**
(21) Anmeldenummer: 15171066.2
(22) Anmeldetag: 08.06.2015
(51) Int. Cl.: H01Q 1/50, H01Q 1/52, H02J 9/00, B60R 16/04, H01Q 1/32

(54) **ANTENNENANORDNUNG IN EINEM FAHRZEUG**
ANTENNA ASSEMBLY IN A VEHICLE
AGENCEMENT D'ANTENNES DANS UN VÉHICULE

(30) Priorität: 11.06.2014 DE 102014211091
(43) Veröffentlichungstag der Anmeldung: 16.12.2015
(73) Patentinhaber: Continental Automotive GmbH, 30165 Hannover (DE)
(72) Erfinder: Rombach, Gerhard, 78098 Triberg (DE); Scherzinger, Martin, 78073 Bad Dürrheim (DE); Höni, Helmut, 78733 Aichhalden (DE)

(56) Entgegenhaltungen:
- DE-A1-102012 215 846
- DE-C1- 4 211 578
- DE-U1- 20 023 511
- US-A- 4 649 286

## Beschreibung

Die Erfindung betrifft eine Antennenanordnung in einem Fahrzeug, insbesondere eine Antennenanordnung in einem Fahrzeug mit Batterie-Trennschalter.

In Fahrzeugen liefern Fahrzeugbatterien elektrischen Strom beispielsweise für den Anlasser von Verbrennungsmotoren sowie für die verschiedensten weiteren Applikationen. Weitere Applikationen können beispielsweise elektrische Fensterheber, eine Klimaanlage oder ein Entertainmentsystem sein. Aber auch verschiedene sicherheitsrelevante Verbraucher wie zum Beispiel Warnblinkanlagen oder Tachographen werden von der Fahrzeugbatterie mit Energie versorgt.

Aus sicherheitstechnischen Gründen, beispielsweise um Funkenbildung oder Kabelbrand zu vermeiden, ist es gewünscht und teilweise auch vorgeschrieben, dass die Batterie nach dem Abschalten des Fahrzeugs vom Bordnetz abgetrennt wird. Durch eine solche Sicherheitsabschaltung werden die verschiedenen Applikationen und Verbraucher im Fahrzeug nicht weiter mit Energie versorgt nachdem das Fahrzeug abgestellt wurde. Batterietrennvorrichtungen, bei welchen die Verbindung zwischen dem Pluspol der Batterie und den Verbrauchern unterbrochen wird, sind beispielsweise aus der DE 42 11 578 C1 oder der DE 200 23 511 U1 bekannt. Heutzutage erfolgt die Abschaltung, insbesondere in Fahrzeug-Architekturen, die außerhalb Westeuropas zum Einsatz kommen, allerdings meist durch einen Schalter in der Minus-Rückleitung zwischen Masse (Chassis des Fahrzeugs) und dem Minuspol der Batterie.

Einige Verbraucher dürfen jedoch nicht mittels des Batterietrennschalters vom Bordnetz getrennt werden. Hierzu gehören insbesondere sicherheitsrelevante Applikationen eines Fahrzeugs, welche zu jedem Zeitpunkt mit der Batterie verbunden sein müssen. Beispielsweise dürfen Tachographen meist nicht vom Strom getrennt werden, da sie auch während der Standzeiten eines Fahrzeugs Daten aufzeichnen müssen.

In Fahrzeugen mit aktiven Antennen, insbesondere etwa für Mobile-Applikationen und Applikationen aus dem Bereich GSM (Global System for Mobile Communications), LTE (Long Term Evolution), DSRC (Distance short range communication) oder GNSS- (Global Navigation Satellite System), werden vorhandene aktive Antennen, welche ebenfalls von der Fahrzeugbatterie mit Energie versorgt werden, bei bekannten Lösungen über den gleichen Massepfad wie beispielsweise vorhandene Tachographen verbunden. Bei einem Kabelbruch oder bei der Installation der Antenne stellt dies jedoch ein Sicherheitsproblem dar, da sich Strompfade über der Antennenleitung ausbilden können, welche in der Antennenanordnung verwendete Bauteile beschädigen können. Wird ein Batterietrennschalter in der Minus-Rückleitung angeordnet, ergeben sich durch einen Widerstand der Verbindungsleitungen zwischen den einzelnen Komponenten Potentialunterschiede. Dadurch können Ströme zwischen der Antenne und anderen Komponenten auftreten, um diese Potentialunterschiede auszugleichen (sog. Potentialausgleichsströme). Durch diese Ströme können Beschädigungen und Zerstörungen entlang des Strompfades hervorgerufen werden, welche im Extremfall zu Fahrzeugbränden führen können. Zudem ist der Betrieb von zum Beispiel Dachantennen eingeschränkt, wenn diese über den gleichen Massepfad verbunden werden, was sich negativ auf die Qualität des Empfangs auswirkt.

Aufgabe der vorliegenden Erfindung ist es, ein Antennensystem bereitzustellen, welches die oben genannten Nachteile nicht aufweist.

Diese Aufgabe wird durch eine Antennenanordnung gemäß Patentanspruch 1 gelöst. Ausgestaltungen und Weiterbildungen der Erfindung sind Gegenstand von Unteransprüchen.

Eine erfindungsgemäße Antennenanordnung umfasst eine Batterie, die einen ersten Pol und einen zweiten Pol aufweist, wobei der zweite Pol mit einem Anschluss für ein Referenzpotential verbunden ist. Die Antennenanordnung umfasst weiterhin ein Schaltelement, das zwischen den zweiten Pol der Batterie und den Anschluss für das Referenzpotential geschaltet ist. Die Antennenanordnung umfasst des Weiteren ein Steuergerät mit einem ersten Anschluss, einem zweiten Anschluss und einem dritten Anschluss, wobei der erste Anschluss mit dem ersten Pol und der zweite Anschluss mit dem zweiten Pol der Batterie verbunden ist und das Steuergerät dazu ausgebildet ist, ein hochfrequentes Signal zu empfangen. Die Anordnung umfasst auch eine Antenne, die zwischen das Steuergerät und den Anschluss für das Referenzpotential geschaltet ist. Weiterhin umfasst die Antennenanordnung eine Entkopplungsstufe, die zwischen die Antenne und das Steuergerät geschaltet ist und die dazu ausgebildet ist, das von der Antenne empfangene hochfrequente Signal von der Antenne an das Steuergerät und einen von dem hochfrequenten Signal spektral entkoppelten Versorgungsgleichstrom vom Steuergerät an die Antenne zu übertragen.

Durch das Vorsehen einer Masseverbindung der Antenne kann der Empfang der Antenne verbessert werden. Zudem ist die Anordnung unempfindlicher gegenüber Störungen der elektromagnetischen Verträglichkeit (EMV). Durch das Vorsehen der Entkopplungsstufe zwischen der Antenne und dem Steuergerät können das Antennensignal und der Versorgungsstrom der Antenne auf einer Leitung entgegengesetzt übertragen werden. Dadurch wird mittels einer einfachen und kostengünstigen Lösung die Sicherheit in der Antennenanordnung erhöht.

Die Entkopplungsstufe kann eine erste und eine zweite Kapazität, die beispielsweise in zwei unterschiedlichen Leitern einer Leitung zwischen die Antenne und das Steuergerät geschaltet sind, und eine Diode, die parallel zu der ersten Kapazität geschaltet ist, umfassen. Es sind somit nur wenige Bauteile erforderlich, um eine Entkopplung der Ströme zu erreichen.

Die Entkopplungsstufe kann mit einer Verbindungsleitung verbunden sein, die zwischen der Antenne und dem Steuergerät angeordnet ist. So kann die Entkopplungsstufe leicht beispielsweise in das Steuergerät oder in die Antenne integriert werden.

Das von der Antenne empfangene Signal kann über die in unterschiedlichen Leitern der Verbindungsleitung angeordneten Kapazitäten von der Antenne an das Steuergerät übertragen werden. Der Versorgungsstrom kann über die Diode vom Steuergerät zur Antenne fließen und dann über das Fahrzeugchassis wieder zurück. Dies ermöglicht die Übertragung des Antennensignals und des Antennenstroms auf nur einer Leitung in entgegengesetzte Richtungen.

Die Entkopplungsstufe kann jedoch beispielsweise auch in die Verbindungsleitung integriert werden. Die Verbindungsleitung kann beispielsweise einen Innenleiter und eine den Innenleiter umgebende Abschirmung umfassen. Dabei können die erste Kapazität und die Diode mit dem Innenleiter und die zweite Kapazität mit der Abschirmung verbunden werden. Dies stellt eine sehr einfache und kostengünstige Lösung dar.

Mittels eines Isolationsmittels kann die in der Verbindungsleitung integrierte Entkopplungsstufe leicht zur Umgebung hin isoliert werden. Das Isolationsmittel kann die Verbindungsleitung zumindest teilweise umgeben und einen Schrumpfschlauch oder ein Klebstoffsystem umfassen. Solche Lösungen sind sehr kostengünstig zu implementieren.

Die Entkopplungsstufe kann jedoch auch leicht auf einer Leiterplatte angeordnet sein, die in der Antenne angeordnet ist und bereits Bauteile, die für die Funktion der Antenne benötigt werden, aufweist. Da die Leiterplatte bereits in der Antenne vorhanden ist, kann die Entkopplungsstufe auf sehr einfache und fertigungsoptimierte Weise in diese integriert werden.

Die Erfindung wird nachfolgend anhand der in den Figuren der Zeichnungen dargestellten Ausführungsbeispiele näher erläutert, wobei gleiche Elemente mit gleichen Bezugszeichen versehen sind. Es zeigt:
- Figur 1: ein Blockschaltbild einer Batterie-Anordnung mit einem Batterie-Trennschalter;
- Figur 2: ein Blockschaltbild einer Batterie-Anordnung mit einem Batterie-Trennschalter und einer Entkopplungsstufe;
- Figur 3: ein Schaltbild einer Entkopplungsstufe; und
- Figur 4: ein Schaltbild einer Entkopplungsstufe in einer Antennenverbindung.

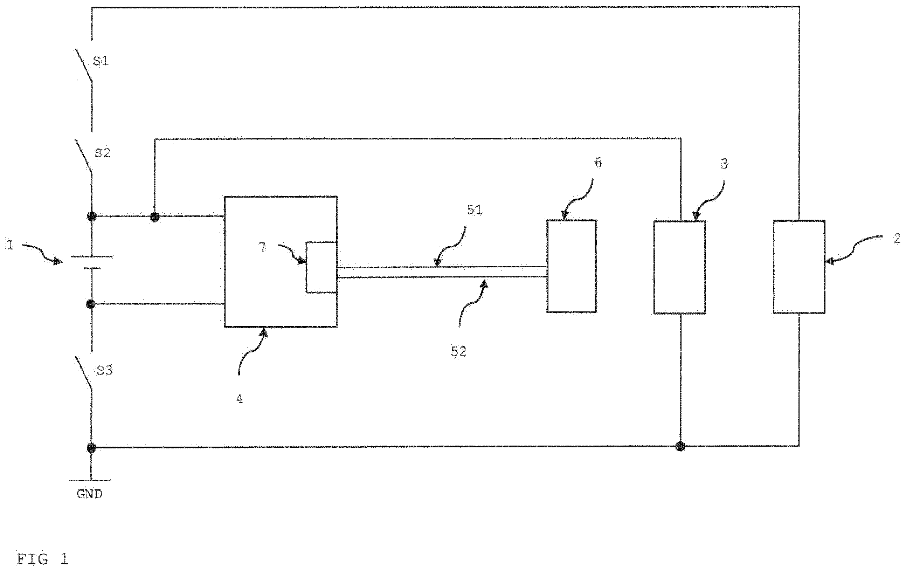

Figur 1 zeigt eine Anordnung in einem Fahrzeug mit einer Batterie 1. Die Batterie 1 weist einen Pluspol und einen Minuspol auf, wobei der Minuspol der Batterie 1 mit einem Anschluss für ein Referenzpotential GND verbunden ist. Ein erstes Steuergerät 2 ist zwischen den Pluspol der Batterie 1 und den Anschluss für das Referenzpotential GND geschaltet. Das erste Steuergerät 2 kann beispielsweise ein Karosseriesteuergerät sein, welches Fahrzeugfunktionen wie elektrische Fensterheber, Scheinwerfer und dergleichen steuert und überwacht. Zwischen den Pluspol der Batterie 1 und das erste Steuergerät 2 sind ein Zündschalter S1 und ein Hauptschalter S2 geschaltet. Sind die Schalter S1, S2 geöffnet, so ist das erste Steuergerät 2 von der Batterie 1 getrennt und wird nicht weiter mit Energie versorgt. Der Zündschalter S1 und der Hauptschalter S2 sind beispielsweise geöffnet, wenn das Fahrzeug abgestellt und die Zündung ausgeschaltet wurde. Als Schalter S1, S2 kommen heutzutage meist elektronische Schalter, wie beispielsweise Halbleiterschalter, zum Einsatz.

Ein zweites Steuergerät 3 ist zwischen einen Verbindungspunkt zwischen dem Pluspol der Batterie 1 und dem Hauptschalter S2 und den Anschluss für das Referenzpotential GND geschaltet. Das zweite Steuergerät 3 kann beispielsweise ein niederohmiger Verbraucher wie z. B. eine Lampe sein. Auch wenn Haupt- und Zündschalter S1, S2 geöffnet sind, wird das zweite Steuergerät weiterhin mit Energie versorgt.

Ein Batterie-Trennschalter S3 ist zwischen den Minuspol der Batterie 1 und den Anschluss für das Referenzpotential GND geschaltet. Der Batterie-Trennschalter S3 kann geöffnet werden, um einen ungewollten Stromverbrauch durch Verbraucher im Fahrzeug zu verhindern. Bei einigen Verbrauchern ist es jedoch erwünscht oder sogar vorgeschrieben, dass diese auch bei geöffnetem Batterie-Trennschalter S3 weiterhin mit Energie versorgt werden, wie z. B. Tachographen. Tachographen, oft auch Fahrtenschreiber genannt, sind Kontrollgeräte, die zur Überwachung verschiedenster Fahrzeugbetriebsparameter in Kraftfahrzeugen installiert werden. Fahrzeugbetriebsparameter können beispielsweise Fahrtzeiten, eine zurückgelegte Strecke oder während der zurückgelegten Strecke gefahrene Durchschnitts- und Maximalgeschwindigkeiten sein. Auch bestimmte Ereignisse, wie beispielsweise Lenkzeitunterbrechungen, können vom Tachographen erfasst und gespeichert werden. Tachographen müssen in der Regel zu jedem Zeitpunkt mit Energie versorgt werden, um eine lückenlose Aufzeichnung der Fahrzeugbetriebsparameter zu garantieren.

Ein drittes Steuergerät 4 ist daher zwischen den Pluspol und den Minuspol der Batterie 1 geschaltet und wird durch die Batterie 1 mit Energie versorgt, auch wenn Haupt- und Zündschalter S1, S2 sowie der Batterie-Trennschalter S3 geöffnet sind. Das dritte Steuergerät 4 kann einen Tachographen umfassen. Das dritte Steuergerät 4 kann über eine Verbindungsleitung, welche eine Zweidrahtleitung mit zwei Drähten 51, 52 sein kann, mit einer Antenne 6 verbunden sein. Die Verbindungsleitung kann beispielsweise eine Hochfrequenzleitung sein, die dazu ausgebildet ist, von der Antenne 6 empfangene hochfrequente Signale an das dritte Steuergerät 4 zu übertragen. Das dritte Steuergerät 4 kann ein Empfangsgerät 7 aufweisen, um die Signale von der Antenne 6 zu empfangen.

In Fahrzeugen finden heutzutage üblicherweise aktive Antennen Verwendung. Aktive Antennen weisen einen integrierten Antennenverstärker auf, welcher die empfangenen Signale verstärkt, ohne dass diese auf der Übertragungsleitung durch Rauschsignale oder andere Störsignale beeinträchtigt werden können. Aktive Antennen werden in der Regel über denselben Massepfad wie z. B. ein Tachograph mit der Fahrzeugmasse verbunden. Kommt es in der Anordnung zu einem Kabelbruch, so kann sich dies jedoch negativ auf die Qualität des Empfangs der Antenne 6 auswirken.

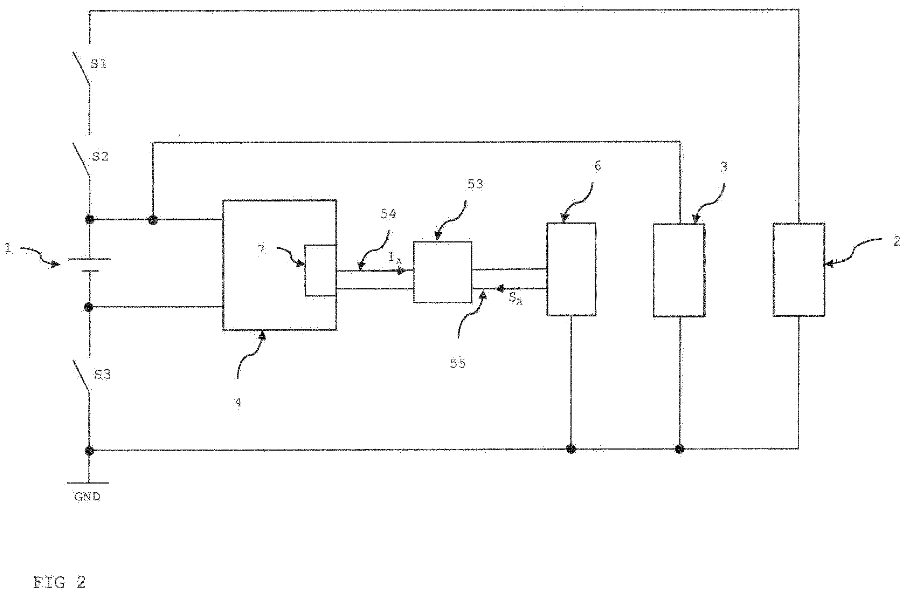

Aus diesem Grund ist erfindungsgemäß vorgesehen, dass die Antenne 6 zwischen das dritte Steuergerät 4 und den Anschluss für das Referenzpotential GND geschaltet ist. Das Referenzpotential GND der Antenne kann beispielsweise ein niederohmiges, erdnahes Potential wie die Chassismasse sein. Durch diese Anbindung der Antenne an den Masseanschluss GND erhöht sich beispielsweise die Empfangsqualität, indem Störungen, welche von durch elektrische Felder verursachten Störeinkopplungen erzeugt werden, reduziert werden. Weiterhin ist eine Entkopplungsstufe 53 in der Anordnung vorgesehen, welche zwischen die Antenne 6 und das dritte Steuergerät 4 geschaltet ist. Eine Anordnung mit einer Masseverbindung der Antenne 6 und einer Entkopplungsstufe 53 ist beispielhaft in Figur 2 dargestellt. Die Entkopplungsstufe 53 ist dabei dazu ausgebildet, von der Antenne 6 empfangene hochfrequente Signale S_{A} von der Antenne 6 zum dritten Steuergerät 4 zu übertragen. Die Entkopplungsstufe 53 ist weiterhin dazu ausgebildet, einen Strom I_{A} vom dritten Steuergerät 4 an die Antenne 6 zu übertragen. Auf diese Weise kann die Antenne 6 über einen ersten Leiter 54 der Verbindungsleitung mit Strom versorgt werden, so dass keine zusätzliche Verbindungsleitung zur Übertragung eines Stromes an die Antenne benötigt wird. Parasitäre Strompfade hingegen können sich bei Verwendung einer Entkopplungsstufe 53 nicht ausbilden. Das von der Antenne 6 an das Steuergerät 4 über einen zweiten Leiter 55 der Verbindungsleitung übertragende hochfrequente Antennensignal S_{A} ist somit von dem vom Steuergerät 4 an die Antenne 6 übertragenen Strom I_{A} spektral entkoppelt.

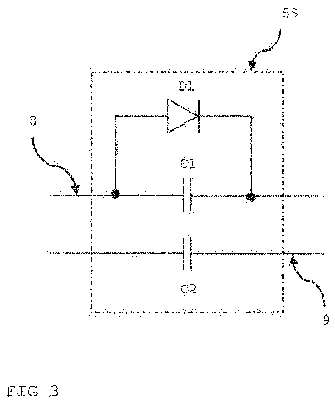

Figur 3 zeigt beispielhaft eine Ausführungsform der Entkopplungsstufe 53. Die Entkopplungsstufe 53 weist eine erste Kapazität C1 und eine zweite Kapazität C2 auf. Die erste Kapazität C1 kann beispielsweise mit einem Innenleiter 8 der für hohe Frequenzen geeigneten Verbindungsleitung verbunden sein. Der Innenleiter 8, welcher die von der Antenne 6 empfangenen, hochfrequenten Signale überträgt, ist in der Regel von einer Abschirmung 9 umgeben. Die Abschirmung 9 ist häufig ein aus Metallbändern hergestelltes Geflecht, welches die Abstrahlung elektromagnetischer Wellen in die Umgebung verhindert. Die zweite Kapazität C2 kann beispielsweise mit der Abschirmung 9 der Verbindungsleitung verbunden sein. Die von der Antenne 6 empfangenen hochfrequenten Signale können somit über die Kapazitäten C1, C2 an das dritte Steuergerät 4 übertragen werden. Die Kapazitäten C1, C2 können dabei derart dimensioniert werden, dass die zur Übertragung notwendigen Bandbreiten erreicht werden können. Beispielsweise kann es vorteilhaft sein, die Kapazitäten C1, C2 möglichst klein zu dimensionieren.

Weiterhin ist eine Diode D1 vorgesehen, die parallel zu der Kapazität C1 geschaltet ist. Die Diode D1 kann dabei über ihre Anode mit dem dritten Steuergerät 4 und über ihre Kathode mit der Antenne 6 verbunden sein. Über die Diode D1 kann die Antenne 6 über das dritte Steuergerät 4 von der Batterie 1 mit Strom I_{A} versorgt werden. Das Antennensignal und der Versorgungsstrom I_{A} für die Antenne 6 können somit auf einer Leitung in entgegengesetzte Richtung übertragen werden. Auf diese Weise werden unerwünschte Stromkopplungen im Fahrzeug unterdrückt.

In Antennenanordnungen in welchen passive Antennen Verwendung finden, kann die Diode D1 weggelassen werden. In derartigen Anordnungen ist eine rein kapazitive Entkopplung ausreichend.

Das Vorsehen einer derartigen Entkopplungsstufe 53 erhöht die Sicherheit in Fahrzeugen die einen Batterie-Trennschalter S3 zwischen dem Minuspol der Batterie 1 und dem Anschluss für Referenzpotential GND aufweisen. Wobei die Sicherheit sowohl bei der Installation der verschiedenen Komponenten, als auch während des Betriebs verbessert ist. Auch ist die Antennenanordnung mit einer Entkopplungsstufe 53 und einer Verbindung der Antenne 6 mit dem Anschluss für Referenzpotential GND unempfindlicher gegenüber EMV-Störungen die von anderen Komponenten im Fahrzeug verursacht werden. Zudem erhöht sich dadurch auch die Empfangsqualität der Antenne 6. Die Entkopplungsstufe 53 ist dabei, wie oben dargestellt, einfach und kostengünstig mit wenigen Bauteilen realisierbar. Ein weiterer Vorteil besteht darin, dass durch die mit der Entkopplungsstufe 53 erreichte definierte Entkopplung verschiedenste Antennen unterschiedlicher Hersteller in der Antennenanordnung verwendet werden können, ohne weitere Anpassungen am System vornehmen zu müssen.

Die Entkopplungsstufe 53 kann beispielsweise in der Verbindungsleitung zwischen der Antenne 6 und dem dritten Steuergerät 4 angeordnet sein. Die Entkopplungsstufe 53 kann alternativ jedoch auch in einer Adapteranordnung angeordnet sein, die mit der Antenne 6 und der Verbindungsleitung verbunden ist. Weiterhin kann die Entkopplungsstufe 53 auch auf einer Leiterplatte in der Antenne 6 angeordnet sein.

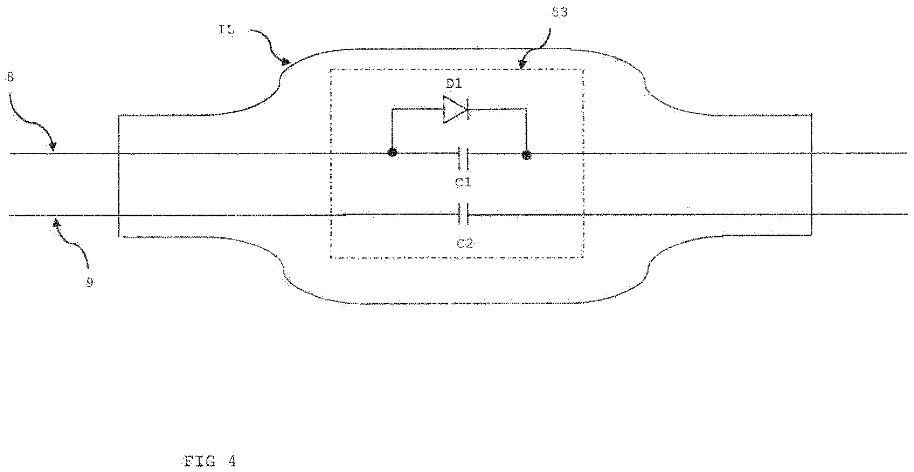

Ist die Entkopplungsstufe 53 in der Verbindungsleitung integriert, kann diese durch eine Isolierung IL zur Umgebung hin geschützt werden. Dies ist beispielhaft in Figur 4 dargestellt. Die Isolierung IL umgibt dabei zumindest abschnittsweise den Innenleiter 8 sowie die Abschirmung 9. Die Isolierung IL kann beispielsweise ein Schrumpfschlauch oder ein Klebstoffsystem sein, welche den Innenleiter 8 und die Schirmung 9 einer Hochfrequenzleitung zumindest abschnittsweise umgibt. Wird die Entkopplungsstufe 53 auf einer Leiterplatte der Antenne 6 angeordnet, kann eine Impedanzanpassung (auch Leistungsanpassung genannt) durchgeführt werden, um die Leiterplattenstruktur optimal in Bezug auf die hohen Frequenzen auszulegen.

## Patentansprüche

1. Antennenanordnung umfassend
eine Batterie (1), die einen ersten Pol und einen zweiten Pol aufweist, wobei der zweite Pol mit einem Anschluss für ein Referenzpotential (GND) verbunden ist; ein Schaltelement (S3), das zwischen den zweiten Pol der Batterie (1) und den Anschluss für das Referenzpotential (GND) geschaltet ist;
ein Steuergerät (4) mit einem ersten Anschluss, einem zweiten Anschluss und einem dritten Anschluss, wobei der erste Anschluss mit dem ersten Pol und der zweite Anschluss mit dem zweiten Pol der Batterie (1) verbunden ist und wobei das Steuergerät (4) dazu ausgebildet ist, an dem dritten Anschluss ein Signal (S_{A}) zu empfangen; und
eine Antenne (6), die zwischen den dritten Anschluss und den Anschluss für das Referenzpotential (GND) geschaltet ist;
eine Entkopplungsstufe (53), die zwischen die Antenne (6) und den dritten Anschluss des Steuergerätes (4) geschaltet ist und die dazu ausgebildet ist, das von der Antenne (6) empfangene Signal (S_{A}) von der Antenne (6) an das Steuergerät (4) und einen von dem Signal (S_{A}) spektral entkoppelten Versorgungsstrom (I_{A}) vom Steuergerät (4) an die Antenne (6) zu übertragen.

2. Antennenanordnung nach Anspruch 1, wobei die Entkopplungsstufe (53) eine erste Kapazität (C1), eine zweite Kapazität (C2) und eine Diode (D1) umfasst.

3. Antennenanordnung nach Anspruch 2, wobei die Entkopplungsstufe (53) mit einer Verbindungsleitung verbunden ist, die zwischen das Steuergerät (4) und die Antenne (6) geschaltet ist.

4. Antennenanordnung nach Anspruch 3, wobei die Kapazitäten (C1, C2) in unterschiedlichen Leitern (54, 55) der Verbindungsleitung zwischen die Antenne (6) und das Steuergerät (4) geschaltet sind.

5. Antennenanordnung nach einem der Ansprüche 2 bis 4, wobei die Diode (D1) parallel zu der ersten Kapazität (C1) zwischen die Antenne (6) und das Steuergerät (4) geschaltet ist.

6. Antennenanordnung nach einem der Ansprüche 2 bis 5, wobei das von der Antenne (6) empfangene Signal (S_{A}) dazu ausgebildet ist, über die erste und die zweite Kapazität (C1, C2) von der Antenne (6) an das Steuergerät (4) übertragen zu werden.

7. Antennenanordnung nach einem der Ansprüche 2 bis 6, wobei der Versorgungsstrom (I_{A}) dazu ausgebildet ist, über die Diode (D1) vom Steuergerät (4) an die Antenne (6) übertragen zu werden.

8. Antennenanordnung nach einem der Ansprüche 3 bis 7, wobei die Entkopplungsstufe (53) in die Verbindungsleitung integriert ist.

9. Antennenanordnung nach Anspruch 8, wobei die Verbindungsleitung einen Innenleiter (8) und eine den Innenleiter (8) umgebende Abschirmung (9) umfasst und die erste Kapazität (C1) und die Diode (D1) mit dem Innenleiter (8) und die zweite Kapazität (C2) mit der Abschirmung (9) verbunden sind.

10. Antennenanordnung nach Anspruch 9, wobei die Entkopplungsstufe (53) durch ein Isolationsmittel (IL) zur Umgebung hin isoliert wird, wobei das Isolationsmittel (IL) die Verbindungsleitung zumindest abschnittsweise umgibt.

11. Antennenanordnung nach Anspruch 10, wobei das Isolationsmittel (IL) einen Schrumpfschlauch oder ein Klebstoffsystem umfasst.

12. Antennenanordnung nach einem der vorhergehenden Ansprüche, wobei die Antenne (6) eine Leiterplatte aufweist und die Entkopplungsstufe (53) auf der Leiterplatte angeordnet ist.

## Claims

1. Antenna arrangement comprising
a battery (1) having a first pole and a second pole, the second pole being connected to a connection for a reference potential (GND);
a switching element (S3) which is connected between the second pole of the battery (1) and the connection for the reference potential (GND);
a control device (4) having a first connection, a second connection and a third connection, the first connection being connected to the first pole and the second connection being connected to the second pole of the battery (1), and the control device (4) being designed to receive a signal (S_{A}) at the third connection; and
an antenna (6) which is connected between the third connection and the connection for the reference potential (GND);
a decoupling stage (53) which is connected between the antenna (6) and the third connection of the control device (4) and is designed to transmit the signal (S_{A}) received by the antenna (6) from the antenna (6) to the control device (4) and to transmit a supply current (I_{A}) spectrally decoupled from the signal (S_{A}) from the control device (4) to the antenna (6).

2. Antenna arrangement according to Claim 1, the decoupling stage (53) comprising a first capacitance (C1), a second capacitance (C2) and a diode (D1).

3. Antenna arrangement according to Claim 2, the decoupling stage (53) being connected to a connecting line which is connected between the control device (4) and the antenna (6).

4. Antenna arrangement according to Claim 3, the capacitances (C1, C2) being connected in different conductors (54, 55) of the connecting line between the antenna (6) and the control device (4).

5. Antenna arrangement according to one of Claims 2 to 4, the diode (D1) being connected in parallel with the first capacitance (C1) between the antenna (6) and the control device (4).

6. Antenna arrangement according to one of Claims 2 to 5, the signal (S_{A}) received by the antenna (6) being designed to be transmitted from the antenna (6) to the control device (4) via the first and second capacitances (C1, C2).

7. Antenna arrangement according to one of Claims 2 to 6, the supply current (I_{A}) being designed to be transmitted from the control device (4) to the antenna (6) via the diode (D1).

8. Antenna arrangement according to one of Claims 3 to 7, the decoupling stage (53) being integrated in the connecting line.

9. Antenna arrangement according to Claim 8, the connecting line comprising an internal conductor (8) and a screen (9) surrounding the internal conductor (8), and the first capacitance (C1) and the diode (D1) being connected to the internal conductor (8) and the second capacitance (C2) being connected to the screen (9).

10. Antenna arrangement according to Claim 9, the decoupling stage (53) being insulated with respect to the environment by an insulation means (IL), the insulation means (IL) surrounding at least sections of the connecting line.

11. Antenna arrangement according to Claim 10, the insulation means (IL) comprising a heat-shrink sleeve or an adhesive system.

12. Antenna arrangement according to one of the preceding claims, the antenna (6) having a printed circuit board and the decoupling stage (53) being arranged on the printed circuit board.

## Revendications

1. Système d'antenne, comprenant :
une batterie (1) comportant un premier pôle et un deuxième pôle, dans lequel le deuxième pôle est relié à une borne destinée à un potentiel de référence (GND) ;
un élément de commutation (S3) qui est connecté entre le deuxième pôle de la batterie (1) et la borne destinée au potentiel de référence (GND) ;
un appareil de commande (4) comportant une première borne, une deuxième borne et une troisième borne, dans lequel la première borne est reliée au premier pôle et la deuxième borne est reliée au deuxième pôle de la batterie (1) et dans lequel l'appareil de commande (4) est conçu pour recevoir un signal (S_{A}) sur la troisième borne ; et
une antenne (6) qui est connectée entre la troisième borne et la borne destinée au potentiel de référence (GND) ;
un étage de découplage (53) qui est connecté entre l'antenne (6) et la troisième borne de l'appareil de commande (4) et qui est conçu pour transmettre le signal (S_{A}) reçu par l'antenne (6) de l'antenne (6) à l'appareil de commande (4) et pour transmettre un courant d'alimentation (I_{A}) spectralement découplé du signal (S_{A}) de l'appareil de commande (4) à l'antenne (6).

2. Système d'antenne selon la revendication 1, dans lequel l'étape de découplage (53) comprend une première capacité (C1), une deuxième capacité (C2) et une diode (D1).

3. Système d'antenne selon la revendication 2, dans lequel l'étage de découplage (53) est relié à une ligne de connexion qui est connectée entre l'appareil de commande (4) et l'antenne (6).

4. Système d'antenne selon la revendication 3, dans lequel les capacités (C1, C2) sont connectées sur différents conducteurs (54, 55) de la ligne de connexion entre l'antenne (6) et l'appareil de commande (4).

5. Système d'antenne selon l'une quelconque des revendications 2 à 4, dans lequel la diode (D1) est connectée en parallèle à la première capacité (C1) entre l'antenne (6) et l'appareil de commande (4).

6. Système d'antenne selon l'une quelconque des revendications 2 à 5, dans lequel le signal (S_{A}) reçu par l'antenne (6) est conçu pour être transmis par l'intermédiaire des première et deuxième capacités (C1, C2) de l'antenne (6) à l'appareil de commande (4).

7. Système d'antenne selon l'une quelconque des revendications 2 à 6, dans lequel le courant d'alimentation (I_{A}) est apte à être transmis par l'intermédiaire de la diode (D1) de l'appareil de commande (4) à l'antenne (6).

8. Système d'antenne selon l'une quelconque des revendications 3 à 7, dans lequel l'étage de découplage (53) est intégré à la ligne de connexion.

9. Système d'antenne selon la revendication 8, dans lequel la ligne de connexion comprend un conducteur interne (8) et un blindage (9) entourant le conducteur interne (8) et la première capacité (C1) et la diode (D1) sont reliées au conducteur interne (8) et la deuxième capacité (C2) est reliée au blindage (9).

10. Système d'antenne selon la revendication 9, dans lequel l'étage de découplage (53) est isolé vis-à-vis de l'environnement par un moyen d'isolation (IL), dans lequel le moyen d'isolation (IL) entoure au moins par endroits la ligne de connexion.

11. Système d'antenne selon la revendication 10, dans lequel le moyen d'isolation (IL) comprend une gaine thermorétractable ou un système d'adhésif.

12. Système d'antenne selon l'une quelconque des revendications précédentes, dans lequel l'antenne (6) comporte une carte de circuit imprimé et l'étage de découplage (53) est disposé sur la carte de circuit imprimé.
